# EUROPEAN PATENT SPECIFICATION

(11) **EP 0 350 536 B1**
(45) Date of publication and mention of the grant of the patent: **24.03.1993**
(21) Application number: 88201470.7
(22) Date of filing: 12.07.1988
(51) Int. Cl.: C02F 5/00

(54) **Use of a stainless steel sponge to reduce scale in a water reservoir and suchlike**
Verwendung eines rostfreien Stahlschwammes zur Reduktion von Kesselstein in einem Wasserspeicher, usw.
Utilisation d'une éponge en acier inoxydable pour la réduction du dépôt de tartre dans un réservoir d'eau, etc ...

(43) Date of publication of application: 17.01.1990
(73) Proprietor: Henken Non Food Holding B.V., NL-3771 MA Barneveld (NL)
(72) Inventor: Bogers, Peter Cornelis Leonard, NL 5503 SK Veldhoven (NL)
(74) Representative: Hooiveld, Arjen Jan Winfried

(56) References cited:
- CH-A- 348 123
- FR-A- 1 404 362

## Description

The invention relates to the use of a sponge of stainless steel which can be installed in a water reservoir, in particular a hot water reservoir, in order to decrease deposits such as calcium on the bottom or other parts of the reservoir.

Such a use of an "anti-scale sponge" is known from the Swiss patent publication CH-A-348.123 (Household Articles Ltd.). This Swiss patent document discloses a sponge formed by a relatively elastic body made of a blade or ribbon of a non-corrosive, folded and compressed wire-netting. Deposits can be removed by squeezing the body with the fingers of one's hand.

During tests, however, it appeared that the effect of such a sponge is only slight. When brought into a kettle it may well find itself on the bottom of the kettle, when the water brought into it, is heated. Most of the sediments occur near the hottest place of the kettle, e.g. the bottom of the kettle and will proportionally be spread over the existing germination surface. however, the germination surface of the sponge already known, is only small in relation to the surface of the wall of the kettle, being in contact with liquid.

By this also the calcium deposits on the known sponge will be relatively small. Even more, it sometimes happens that, as soon as the water comes to a boil and vapour bubbles are rising, the sponge is moving and does not stay on the bottom, resulting in the fact that the effect of the sponge will practically come to nought.

The intended purpose of the invention is to improve this particular kind of sponge in such a way that it will better meet the requirements. According to the invention this has been achieved, as the use of a stainless steel sponge is proposed for installation in a water reservoir, in particular in a hot water reservoir, in order to reduce sedimentation, such as scale deposits, on the bottom or other parts of the reservoir, which sponge is made of stainless steel wire, having a rectangular cross-section with a thickness varying between 0.03 and 0.05 mm, and a width varying from 5 to 20 times the thickness.

In this way the achievement will be that the surface of the steel wire is 100 to 200 % larger than the surface of a round wire of the same length. Surprisingly, it appeared that sedimentation of scale takes place particularly on the sponge, when the sponge is being made this way. The surface of the sponge appears to be an equally good germination place for gases and salts dissolved in the water, as is the wall and bottom of the reservoir. Calcium is dissolved in water with the aid of carbon dioxide which, when the water is heated, will escape (calcium-dioxide balance).

Because of this the solubility of calcium in water is decreased and the calcium salt will precipitate on the germination places. When we have to make sure that these germination places will chiefly find themselves in the sponge, then the deposition of calcium salts on the walls of the reservoir can be reduced.

When there is less deposition of calcium it also means that energy will be saved when the water in the reservoir is heated.

A sponge for the use according to the invention is made according to a method whereby a round stainless steel wire is rolled between two cylinders in such a way that said wire will get the desired rectangular cross-section, after which the wire is guided along a chisel edge while being stressed and, on being detached, will curl.

In particular it will be departed from a wire of 0.10 to 0.25 mm diameter.

The invention also relates to the use of a sponge as described above, whereby the sponge is being installed as close as possible to the hottest place of an apparatus such as a boiler, kettle, hot-drinks dispenser, steam-iron, shower-head or tap, washing-machine, dish-washer, etc.

In particular it can be arranged that the sponge is removably placed in the apparatus. After being used for a period of time, then the sponge can be removed and replaced.

Before being used, the sponge will be cleaned, for instance ultrasonically, so that the sponge will cause no risk for health or environment.

Now the invention will be explained by means of an embodiment shown in the drawing, in which:
- Figure 1: schematically shows a sponge according to the present invention;
- Figure 2: schematically shows how the sponge can be installed at the most favourable position in a water reservoir;
- Figure 3: schematically shows the rolling of a round wire, and
- Figure 4: schematically shows the way a sponge is made according to the invention.

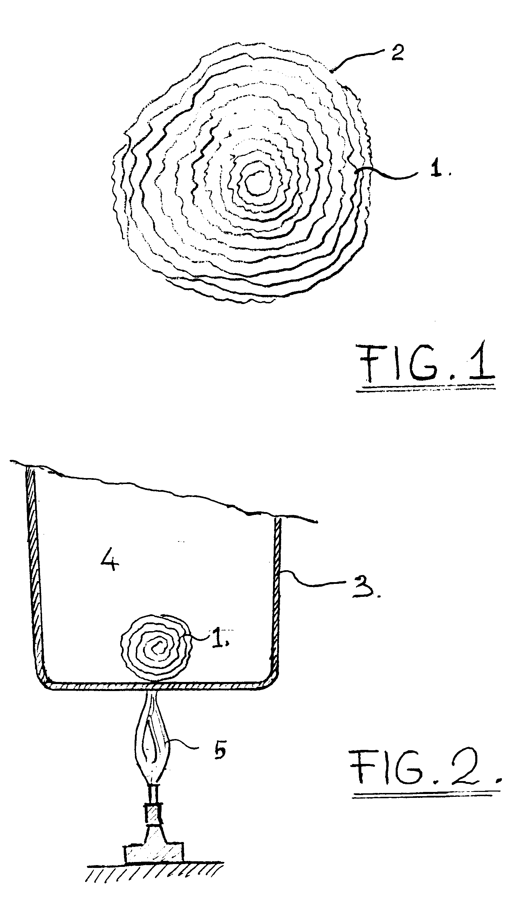

Figure 1 shows a sponge 1, obtained after a wire 2 with a rectangular cross-section has been shaped into a "clew".

Figure 2 shows the sponge 1, after being installed in the reservoir 3 which contains water. The reservoir 3 is being heated, as indicated, with the gas flame 5. The sponge finds itself on the place of the reservoir with the highest temperature and where the risk of scale deposition is the highest.

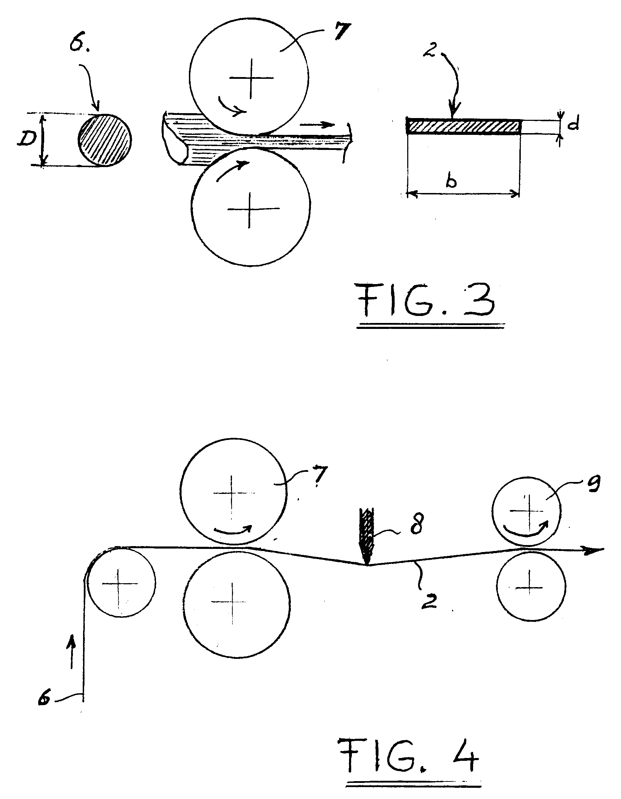

Figure 3 indicates that a round wire 6 with, for instance, a 0.165 mm diameter D is guided between two cylinders 7 in such a way that wire 2 with a rectangular cross-section is obtained. Consequently, the thickness d of the wire can be 0.04 mm and the width b, for instance 0.53 mm.

Figure 4 schematically shows a round wire 6, fed between the cylinders 7, and the rolled wire 2 subsequently, being guided along a chisel edge 8, the rolled wire 2 being held under tension by means of pinch rolls 9. After having passed the pinch rolls, the wire can unstress itself and will automatically curl.

It will be obvious that only one of the possible embodiments of the invention has been shown in the drawing and has been described above, and that many modifications can be made within the scope defined by the appended claims.

## Claims

1. Use of a stainless steel sponge (1) for installation in a water reservoir (3), in particular in a hot water reservoir, in order to reduce sedimentation, such as scale deposits, on the bottom or other parts of the reservoir, which sponge (1) is made of stainless steel wire (2), having a rectangular cross-section with a thickness (d) varying between 0.03 and 0.05 mm, and a width (b) varying from 5 to 20 times the thickness (d).

2. Use of a sponge (1) according to claim 1, whereby the sponge (1) is being installed as close as possible to the hottest place in an apparatus, such as a boiler, kettle, hot-drinks dispenser, steam-iron, shower-nozzle or tap, washing machine, dish-washer or such like.

3. Use of a sponge (1) according to claim 2, whereby the sponge (1) is removably placed in the apparatus.

## Patentansprüche

1. Verwendung eines rostfreien Stahlschwamms (1) zum Einbau in einen Wasserbehälter (3), insbesondere in einen Heißwasserbehälter, um Ablagerungen, wie etwa Kesselsteinablagerungen, auf dem Boden oder anderen Teilen des Behälters zu verringern, dadurch gekennzeichnet, daß der Schwamm (1) aus rostfreiem Stahldraht (2) hergestellt ist, der rechteckigen Querschnitt mit einer zwischen 0,03 und 0,05 mm veränderlichen Dicke (d) und einer vom 5 bis 20-fachen der Dicke (d) veränderlichen Breite (b) hat.

2. Verwendung eines Schwamms (1) nach Anspruch 1, dadurch gekennzeichnet, daß der Schwamm (1) so nahe wie möglich an der heißesten Stelle in einer Vorrichtung, wie einem Warmwasserbereiter, Kessel, Heißgetränkeverteiler, Dampfbügeleisen, Duschdüse oder Hahn, Waschmaschine, Spülmaschine oder ähnlichem eingebaut ist.

3. Verwendung eines Schwamms (1) nach Anspruch 2, dadurch gekennzeichnet, daß der Schwamm (1) herausnehmbar in der Vorrichtung angebracht ist.

## Revendications

1. Utilisation d'une éponge en acier inoxydable (1) pour son installation dans un réservoir d'eau (3), en particulier dans un réservoir d'eau chaude, de façon à réduire la sédimentation, telle que les dépôts de tartre, sur le fond ou autres parties du réservoir, laquelle éponge (1) est réalisée à partir d'un fil d'acier inoxydable (2) ayant une section rectangulaire avec une épaisseur (d) variant entre 0,3 et 0,05 mm, et une largeur (b) variant entre 5 et 20 fois l'épaisseur (d).

2. Utilisation d'une éponge (1) selon la revendication 1, de telle sorte que l'éponge (1) se trouve disposée aussi près que possible de l'emplacement le plus chaud d'un appareil tel qu'une chaudière, une bouilloire, un distributeur de boissons chaudes, un fer à vapeur, une buse ou robinet pour douche, un lave-vaisselle, un lave-linge, un lave-vaisselle ou analogues.

3. Utilisation d'une éponge (1) selon la revendication 2, selon laquelle l'éponge (1) est disposée de façon amovible dans l'appareil.
